Europäisches Patentamt

(19) European Patent Office

Office européen des brevets

(11) EP 1 205 738 A2

## (12) EUROPÄISCHE PATENTANMELDUNG

(43) Veröffentlichungstag:
15.05.2002  Patentblatt 2002/20

(51) Int Cl.$^7$: G01F 9/00

(21) Anmeldenummer: 01124920.8

(22) Anmeldetag: 19.10.2001

(84) Benannte Vertragsstaaten:
AT BE CH CY DE DK ES FI FR GB GR IE IT LI LU MC NL PT SE TR
Benannte Erstreckungsstaaten:
AL LT LV MK RO SI

(30) Priorität: 10.11.2000  DE 10055795

(71) Anmelder: Voith Turbo GmbH & Co. KG
89522 Heidenheim (DE)

(72) Erfinder:
• Dietzel, Bernd
  89428 Syrgenstein (DE)
• Bürk, Richard
  88454 Hochdorf (DE)
• Graf, Gottfried
  73466 Röttingen (DE)

(74) Vertreter: Dr. Weitzel & Partner
Friedenstrasse 10
89522 Heidenheim (DE)

### (54) Verfahren zur Bestimmung des Kraftstoffverbrauches in Fahrzeugen

(57)     Die Erfindung betrifft ein Verfahren zur Bestimmung des Kraftstoffverbrauches in Fahrzeugen mit einem Antriebssystem, umfassend mindestens eine Verbrennungskraftmaschine und eine, dieser zugeordnete Steuereinrichtung,

Das Verfahren ist gekennzeichnet durch die folgenden Merkmale:

- bei welchem der Kraftstoffverbrauch aus den aktuellen Betriebsdaten und Kenndaten der Verbrennungskraftmaschine bestimmt wird, wobei

- mindestens die aktuelle Einspritzmenge ermittelt wird und aus dieser das momentane indizierte von der Verbrennungskraftmaschine abgebbare Moment ermittelt wird;

- der aktuelle Verbrauch pro Sekunde wird dabei aus dem Quotienten aus dem Produkt von relativem indiziertem von der Verbrennungskraftmaschine abgebbarem Moment, mit der Mengenkonstante, der Motordrehzahl in Umdrehung pro Minute und der Zylinderfüllung pro Umdrehung und 60 gebildet wird.

Fig.1

**Beschreibung**

Die Erfindung betrifft ein Verfahren zur Bestimmung des Kraftstoffverbrauches in Fahrzeugen mit einem Antriebssystem, umfassend eine Verbrennungskraftmaschine, im einzelnen mit den Merkmalen aus dem Oberbegriff des Anspruches 1.

Verfahren zur Bestimmung des Kraftstoffverbrauches in Fahrzeugen sind in einer Mehrzahl von Ausführungen bekannt. Die Angabe des aktuellen Kraftstoffverbrauches erfolgt dabei beispielsweise im einfachsten Fall über ein analoges Zeigerinstrument, welches z.B. den Saugrohrunterdruck anzeigt und damit eine, die Stellung des Fahrpedals, welche den Fahrerwunsch nach Beschleunigung charakterisiert, wenigstens mittelbar beschreibende Größe wiederspiegelt. Die Ermittlung des aktuellen Kraftstoffverbrauches erfolgt über die Erfassung spezieller Größen, welche zusätzlich zu den zur Steuerung des Betriebes im Antriebssystem erforderlichen Größen ermittelt werden müssen.

Der Erfindung liegt die Aufgabe zugrunde, ein Verfahren zur Bestimmung des Kraftstoffverbrauches in Fahrzeugen mit einem Antriebssystem, umfassend mindestens eine Verbrennungskraftmaschine, zu entwickeln, welches aus ohnehin ermittelten Kennwerten im Antriebssystem eine Bestimmung des Kraftstoffverbrauches pro Zeiteinheit ermöglicht. Die Ermittlung des Kraftstoffverbrauches soll dabei mit nur sehr geringem steuerungstechnischem Aufwand erfolgen. Desweiteren soll die Anzahl der zu berücksichtigenden Variablen möglichst gering gehalten werden.

Die erfindungsgemäße Lösung ist durch die Merkmale des Anspruches 1 charakterisiert. Vorteilhafte Ausgestaltungen sind in den Unteransprüchen wiedergegeben.

Das Verfahren zur Bestimmung des Kraftstoffverbrauches in Fahrzeugen mit einem Antriebssystem, umfassend eine Verbrennungskraftmaschine und eine dieser zugeordneten Steuereinrichtung ist erfindungsgemäß dadurch charakterisiert, daß mittels der der Verbrennungskraftmaschine zugeordneten Steuereinrichtung mindestens die nachfolgend genannten, den Betrieb der Verbrennungskraftmaschine charakterisierenden Betriebsdaten für mindestens einen bestimmten Zeitpunkt $t_0$ ermittelt werden:

- relatives, indiziertes, momentanes von der Verbrennungskraftmaschine abgebbares Moment $M_{ri}$;
- Mengenkonstante für 100 % des indizierten Momentes.

Der Verbrauch pro Zeiteinheit ergibt sich dabei aus dem Produkt des relativen indizierten von der Verbrennungskraftmaschine abgebbaren Momentes, der Mengenkonstante bei 100 % des indizierten Momentes, der Motordrehzahl und der Anzahl der Zylinderfüllungen pro Umdrehung. Als Zeiteinheit zur Charakterisierung wird dabei vorzugsweise der Kraftstoffverbrauch pro Sekunde festgelegt. Wird die an der Verbrennungskraftmaschine anliegende Abtriebsdrehzahl in Umdrehungen pro Minute angegeben, ergibt sich der Kraftstoffverbrauch pro Sekunde aus dem o.g. Produkt dividiert durch 60. Vorzugsweise wird der Verbrauch pro Sekunde als Referenzverbrauch für einen Referenzzeitraum angesehen. Die entsprechende Gleichung zur Ermittlung des Kraftstoffverbrauches pro Sekunde lautet dabei wie+ folgt:

$$b \ (s) = \frac{M_{ri} \cdot k_{M100} \cdot n_{M(U/min)} \cdot ZF/U}{60}$$

mit:

- $M_{ri}$ -        relatives indiziertes Moment
- $M_{re}$ -        Moment, welches die Steuereinrichtung der Verbrennungskraftmaschine für ein Kommunikationsnetzwerk, insbesondere auf CAN bereitstellt. Das relativ indizierte Moment ist proportional zur Einspritzmenge in den Zylinder der Verbrennungskraftmaschine.
- $k_{M100}$ -        Mengenkonstante bei 100 % indiziertem Moment 100 % indiziertes, von der Verbrennungskraftmaschine abgebbares Moment entsprechen einer Einspritzmenge bestimmter Größe. Diese Mengenkonstante wird vom Hersteller der Verbrennungskraftmaschinen eingestellt und muß daher bekannt sein.
- $n_M$-        Abtriebsdrehzahl der Verbrennungskraftmaschine in Umdrehungen pro Minute
- ZF/U =        Zylinderfüllungen pro Umdrehungen

Dabei gilt, das ein Viertaktmotor eine Einspritzung, das heißt Zylinderfüllung einmal pro zwei Umdrehungen ausführt. Ein Vier-Zylinder-Viertaktmotor weist zwei Zylinderfüllungen pro Umdrehung auf. Ein Sechs-Zylinder-Viertaktmotor bestimmt drei Zylinderfüllungen pro Umdrehungen.

Da im allgemeinen der Zeitabschnitt, für den ein Verbrauch zu errechnen ist, gewöhnlich weniger als eine Sekunde beträgt, ist das Verbrauchsergebnis pro Sekunde entsprechend nachfolgender Umrechenformel in den Kraftstoffverbrauch pro Zeitabschnitt umwandelbar:

$$\Delta t = \Delta t(ms) : 1000 \ ms \cdot Verbrauch \ pro \ Sekunde$$

Unter einem weiteren Aspekt ergibt sich aus der Addition der Kraftstoffverbräuche für jeden einzelnen Zeitabschnitt ein Gesamtverbrauch pro Fahrt. Dazu wird die Gesamtfahrdauer in einzelne Zeitabschnitte $\Delta t_1$ - $\Delta t_n$ unterteilt, wobei die Unterteilung beliebig wählbar ist. Vorzugsweise wird ein entsprechendes Zeitintervall $\Delta t$ vorgegeben, wobei jedoch auch die Möglichkeit besteht, daß dem Zeitabschnitt $\Delta t$ zugrundeliegende Zeitintervall frei vorzugeben. Vorzugsweise wird jedoch die dem Zeitabschnitt zugrundeliegende Zeitdauer möglichst klein gewählt, um ein optimales Ergebnis zu erhalten. Die Addition erfolgt dabei vorzugsweise für jede Fahrstrecke getrennt oder aber für eine Betriebsdauer, welche durch mindestens zwei Referenzereignisse charakterisiert ist. Als Referenzereignis können dabei die nachfolgend genannten, den Betrieb des Fahrzeuges beschreibenden Größen angesehen werden:

- eine beliebige Betriebsdauer, welche durch ein Zeitintervall charakterisiert ist;
- eine hinsichtlich ihrer Länge definierbare Fahrstrecke;

wobei im ersten Fall ein bestimmtes Zeitintervall zugrundegelegt wird, während im zweiten Fall unabhängig von der dafür benötigten Zeit die Fahrstrecke als Referenzkriterium gewählt wird.

In beiden Fällen sind die Referenzereignisse entweder frei wählbar oder fest vorgegeben.

In vorteilhafter Weise können aus den Ergebnissen der Verbrauchsberechnung pro Zeiteinheit beziehungsweise der Addition für einzelne Zeitabschnitte nachfolgend genannte zusätzliche Informationen über den Kraftstoffverbrauch ermittelt werden:

1. Verbrauch pro Stunde und
2. Verbrauch pro definierter Fahrstrecke, beispielsweise 100 km.

Im zweiten Fall sind zur Berechnung jedoch noch zusätzliche Informationen über die tatsächlich befahrene Fahrstrecke erforderlich. Als diese fungiert zum Beispiel die Drehzahl am Abtrieb, die Fahrgeschwindigkeit oder eine andere, für diesen Zweck brauchbare Information.

Unter einem weiteren Aspekt der Erfindung besteht die Möglichkeit, aus den Auswertergebnissen bezüglich des Krafstoffverbrauches pro Zeitabschnitt $\Delta t$ Verbrauchsmaxima und Verbrauchsminima zu ermitteln, welche zur Optimierung des Fahrverhaltens, insbesondere des Verbrennungskraftmaschine-Getriebemanagementes herangezogen werden können.

In einer Weiterentwicklung der Erfindung wird zur Erhöhung der Genauigkeit bei der Berechnung der Zylinderfüllung pro Umdrehung auch die Temperatur des Einspritzmediums mit berücksichtigt.

Die erfindungsgemäße Lösung ermöglicht es, aus den ohnehin zur Verfügung stehenden Betriebsdaten und den Kenndaten der Verbrennungskraftmaschine ein genaues Ergebnis hinsichtlich des Kraftstoffverbrauches pro Zeiteinheit zu erstellen. Dies ist insbesondere für Steuereinrichtungen von Verbrennungskraftmaschinen von Vorteil, welche kommunikationsnetzwerkfähig, insbesondere CAN-fähig sind. Derartige Steuereinrichtungen geben dabei das relative, indizierte momentane von der Verbrennungskraftmaschine abgebbare Moment, welches proportional zur Einspritzmenge ist, auf dem CAN-Bus bekannt. Diese Information kann dann von den unterschiedlichsten Steuergeräten abgerufen werden und eine Ermittlung des Kraftstoffverbrauches für unterschiedlichste Steueraufgaben vorgenommen werden.

Die Vorrichtung zur Ermittlung des Kraftstoffverbrauches umfaßt dazu mindestens die der Verbrennungskraftmaschine zugeordnete Steuereinrichtung, wobei mit dem Begriff Steuereinrichtung im wesentlichen ein Steuergerät zu verstehen ist. Dieses ermöglicht die Erfassung des relativen, indizierten momentanen, von der Verbrennungskraftmaschine abgebbaren Momentes, welches in der Steuereinrichtung der Verbrennungskraftmaschine weiterverarbeitet werden kann oder aber bei Einbindung in ein Kommunikationsnetzwerk von einer anderen Steuereinrichtung vor weiteren Verwertung abgerufen werden kann.

Im letztgenannten Fall werden dabei von der Motorsteuerung die nachfolgend genannten Betriebs- und CAN-Daten zur Verfügung gestellt:

- momentanes relatives indiziertes von der Verbrennungskraftmaschine abgebbares Moment
- Mengenkonstante bei 100 % des indizierten Momentes
- Einspritzmenge
- Art der Verbrennungskraftmaschine, insbesondere Anzahl der Zylinder und Anzahl der Takte.

Zusätzlich kann desweiteren die Drehzahl der Antriebsmaschine mit erfaßt werden. Diese ist jedoch im allgemeinen generell über den CAN-Bus abrufbar. In der Steuereinrichtung erfolgt dann die Berechnung des Kraftstoffverbrauches pro Sekunde anhand der bereits oben ausgeführten Berechnungsformel aus den über den CAN-Bus abgerufenen Größen. Entsprechend des gewünschten Auswertzieles erfolgt die Auswertung hinsichtlich unterschiedlicher Kriterien, beispielsweise wie bereits ausgeführt die Ermittlung des Kraftstoffverbrauches pro Zeiteinheit, Bestimmung von Verbrauchsminima und -maxima aus den Verbrauchsmengen pro Zeiteinheit sowie Berechnung des Verbrauches pro 100 km beziehungsweise pro Stunde.

Dabei besteht unter einem weiteren Aspekt der Erfindung die Möglichkeit, insbesondere um ein detailliertes Auswertergebnis zu erhalten, den einzelnen Verbrauchsmengen pro Zeiteinheit Daten zur Kennzeichnung des Fahrverhaltens und der Fahrstrecke zuzuordnen, so daß sich aus den Anforderungen aufgrund der Fahrstrecke eine dezidiertere Aussage bezüglich des Kraftstoffverbrauches ergibt. Wesentlich sind dabei insbesondere Kennwerte zur Topographie der Fahrstrecke, die einen erhöhten Leistungsbedarf von seiten der Verbrennungskraftmaschine bedingen.

Die erfindungsgemäße Lösung wird nachfolgend anhand von Figuren erläutert. Darin ist im einzelnen folgendes dargestellt:

Figur 1    verdeutlicht anhand eines Signalflußbildes das Grundprinzip der erfindungsgemäßen Ermittlung des Kraftstoffverbrauches.

Figur 2    verdeutlicht die Möglichkeit der Kraftstoffverbrauchsberechnung in einem Antriebssystem anhand eines Blockschaltbildes.

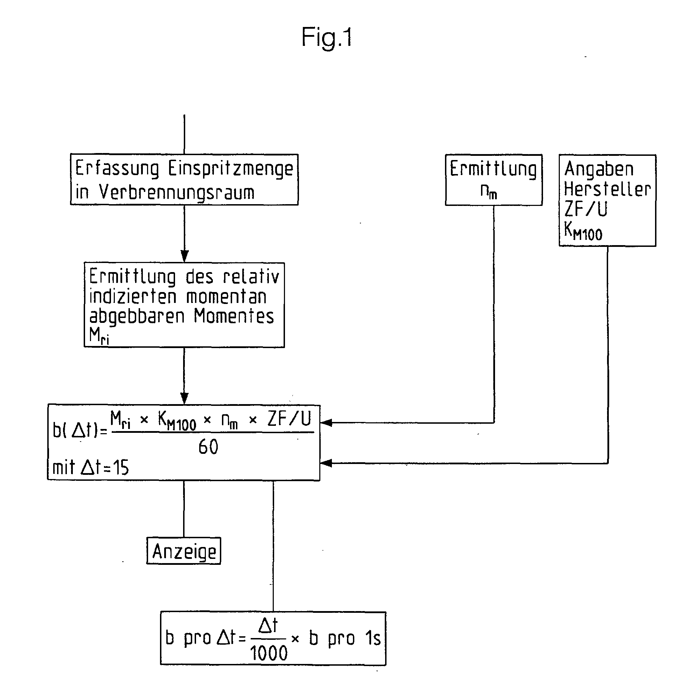

Figur 1 verdeutlicht anhand eines Signalflußbildes das Grundprinzip der erfindungsgemäßen Ermittlung des Kraftstoffverbrauches in einem Antriebssystem, umfassend eine Verbrennungskraftmaschine mit einer dieser zugeordneten Steuereinrichtung. Dabei wird in einem ersten Schritt die Einspritzmenge in den Verbrennungsraum der Verbrennungskraftmaschine erfaßt und der Steuereinrichtung der Verbrennungskraftmaschine als Eingangssignal zugeführt. Aus der Einspritzmenge wird das relative indizierte momentane abgebbare Moment ermittelt. Dieses wird der Berechnung des Kraftstoffverbrauches pro Sekunde zugrunde gelegt. Weitere zur Berechnung erforderliche Größen, wie die Mengenkonstante bei 100 % indiziertem Moment, welche frei vorgebbar ist, und die Motordrehzahl $n_M$ sowie die Anzahl der Zylinderfüllungen pro Zeiteinheit, welche sich aus der Art der Verbrennungskraftmaschine ergeben, werden ebenfalls dem Berechnungsmodus zugeführt. Der Kraftstoffverbrauch pro Sekunde errechnet sich dann aus der nachfolgenden Beziehung:

$$b/s = \frac{M_{ri} \cdot k_{M100} \cdot n_m \cdot \text{Zylinderfüllungen pro Umdrehung}}{60}$$

Dieses Ergebnis kann dann weiteren Auswertalgorithmen unterzogen werden, beispielsweise der Berechnung Verbrauch pro Zeitabschnitt Δt, welcher sich aus der Beziehung b/Δt = Δt: 1000 b/s ergibt. Andere Auswertalgorithmen sind denkbar, beispielsweise die Ermittlung des Verbrauches pro 100 km beziehungsweise des Verbrauches pro Stunde, wobei beide die Ermittlung der Verbrauchsmenge für einen bestimmten Zeitabschnitt Δt voraussetzen.

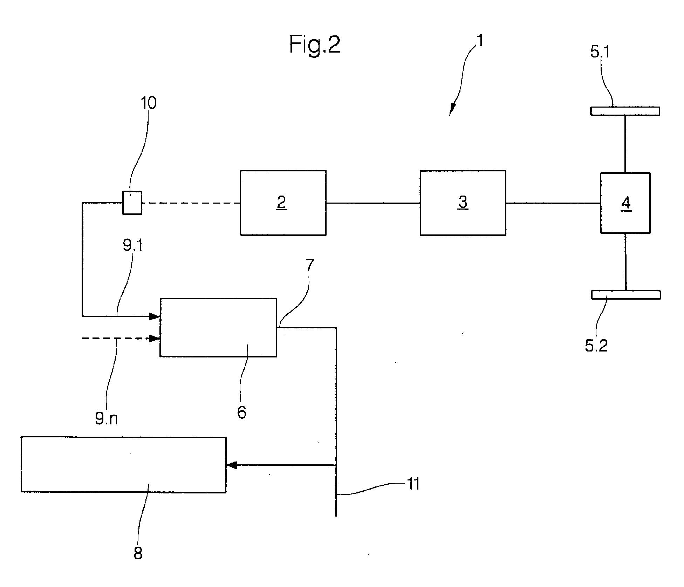

Figur 2 verdeutlicht in schematisch vereinfachter Darstellung anhand eines Antriebssystems 1, umfassend eine Verbrennungskraftmaschine 2, eine mit dieser mechanisch koppelbare Getriebebaueinheit 3, welche wiederum beispielsweise über ein Achsdifferential 4 mit den anzutreibenden Rädern 5.1 und 5.2 koppelbar ist. Der Verbrennungskraftmaschine 2 ist dabei eine Steuereinrichtung 6 zugeordnet. Diese weist wenigstens einen seriellen Ausgang 7 auf, der in ein Datenkommunikationswerk, beispielsweise einen CAN-Bus eingebunden ist. Die Kraftstoffverbrauchsberechnung kann dabei entweder in der Steuereinrichtung 6 der Verbrennungskraftmaschine erfolgen oder in einer separaten Steuereinrichtung 8, welche beispielsweise von der Fahrzeugsteuerung oder einer anderen Steuereinrichtung gebildet wird. Die zur Berechnung erforderlichen Daten bezieht die Steuereinrichtung 8 dabei aus dem CAN-Bus. In der Steuervorrichtung 6 werden dazu die, die Einspritzmenge wenigstens mittelbar charakterisierenden Daten abgelegt, beispielsweise über einen Eingang 9, welcher mit einer Einrichtung zur wenigstens mittelbaren Erfassung der Einspritzmenge 10 mit der Verbrennungskraftmaschine 2 gekoppelt ist. Bei dem Eingang 9 kann es sich um einen seriellen Eingang handeln, vorzugsweise werden jedoch die einzelnen unterschiedlichen Betriebsdaten parallel zugeführt. Die Steuereinrichtung 6 weist dazu eine Vielzahl von Eingängen 9.1 bis 9.n auf.

Desweiteren ist in der Steuereinrichtung 6 motorspezifisch die Mengenkonstante bei 100 % des indizierten Momentes hinterlegt sowie die Art der Verbrennungskraftmaschine, aus der sich die Anzahl der Zylinderfüllungen pro Umdrehung ergibt. Auch diese Daten werden dem CAN-Bus zugeführt, vorzugsweise über die serielle Kopplung am Ausgang 7. In der Steuereinrichtung 8 wird dann der Kraftstoffverbrauch b pro Sekunde aus der Beziehung

$$\frac{M_{re} \cdot k_{M100} \cdot n_M \cdot \text{Zylinderfüllung pro Umdrehung}}{60}$$

erfaßt. Auch die Drehzahl der Antriebsmaschine kann dabei über die Steuereinrichtung 6 der Verbrennungskraftmaschine und den CAN-Bus 11 der Steuereinrichtung 8 zugeführt werden. Eine andere Möglichkeit besteht darin, die Drehzahl direkt dem CAN-Bus zuzuführen.

In der Steuereinrichtung 8 besteht die Möglichkeit aus dem ermittelten Verbrauch pro Sekunde weitere Verbrauchsmengen zu bestimmen, dazu gehört im wesentlichen allgemein der Verbrauch pro Zeitabschnitt $\Delta t$ sowie daraus verbrauchsspezifische Auswertungen bezüglich des Verbrauchs pro Stunde oder einer bestimmten Fahrstrecke, beispielsweise pro 100 Kilometer.

Die Figur 2 verdeutlicht eine Möglichkeit der Einbindung der Verbrauchsmengenberechnung direkt im Antriebssystem, andere Möglichkeiten sind denkbar. Wie bereits ausgeführt besteht die Möglichkeit, die Verbrauchsbestimmung bereits in der der Verbrennungskraftmaschine zugeordneten Steuereinrichtung vorzunehmen oder aber in einer anderen Steuereinrichtung, beispielsweise der Fahrsteuereinrichtung. Die konkrete Auswahl liegt dabei im Ermessen des zuständigen Fachmannes.

Bezugszeichenliste

| | |
|---|---|
| 1 | Antriebssystem |
| 2 | Verbrennungskraftmaschine |
| 3 | Getriebebaueinheit |
| 4 | Achsdifferential |
| 5.1, 5.2 | Räder |
| 6 | Steuereinrichtung der Verbrennungskraftmaschine |
| 7 | Ausgang der Steuereinrichtung 6 |
| 8 | Steuereinrichtung |
| 9.1 - 9.n | Eingänge der Steuereinrichtung 6 |
| 10 | Einrichtung zur wenigstens mittelbaren Erfassung der Einspritzmenge |
| 11 | CAN-Bus |

**Patentansprüche**

1. Verfahren zur Bestimmung des Kraftstoffverbrauches in Fahrzeugen mit einem Antriebssystem, umfassend mindestens eine Verbrennungskraftmaschine und eine, dieser zugeordnete in ein Datenkommunikationsnetzwerk einbindbare Steuereinrichtung, **gekennzeichnet durch** die folgenden Merkmale:

    1.1 bei welchem der Kraftstoffverbrauch aus den aktuellen Betriebsdaten und Kenndaten der Verbrennungskraftmaschine bestimmt wird, wobei

    1.2 mindestens die aktuelle Einspritzmenge ermittelt wird und aus dieser das momentane indizierte von der Verbrennungskraftmaschine abgebbare Moment ermittelt wird;

    1.3 der aktuelle Verbrauch pro Sekunde wird dabei aus dem Quotienten aus dem Produkt von relativem indiziertem von der Verbrennungskraftmaschine abgebbarem Moment, mit der Mengenkonstante, der Motordrehzahl in Umdrehung pro Minute und der Zylinderfüllung pro Umdrehung und 60 gebildet wird.

2. Verfahren nach Anspruch 1, **dadurch gekennzeichnet, daß** der Kraftstoffverbrauch pro Zeitabschnitt in Abhängigkeit des Kraftstoffverbrauches pro Zeiteinheit nach der nachfolgend genannten Formel ermittelt wird:
Verbrauch pro Zeitabschnitt $\Delta t$ = $\Delta t$ (ms) : 1000 ms Verbrauch pro Sekunde.

3. Verfahren nach einem der Ansprüche 1 oder 2, **gekennzeichnet durch** die folgenden Merkmale:

    3.1 eine Gesamtfahrstrecke wird in einzelne Zeitabschnitte unterteilt;

    3.2 der Kraftstoffverbrauch für die Gesamtfahrstrecke ergibt sich aus der Addition des Kraftstoffverbrauches pro Zeitabschnitt.

**4.** Verfahren nach einem der Ansprüche 1 bis 3, **dadurch gekennzeichnet, daß** aus dem Kraftstoffverbrauch pro Zeitabschnitt der Verbrauch pro Stunde ermittelt wird.

**5.** Verfahren nach einem der Ansprüche 1 bis 4, **dadurch gekennzeichnet, daß** aus dem Kraftstoffverbrauch pro Zeitabschnitt der Verbrauch für eine bestimmte vordefinierbare Fahrstrecke berechnet wird.

**6.** Verfahren nach einem der Ansprüche 1 bis 5, **dadurch gekennzeichnet, daß** aus der Verbrauchsmenge pro Zeitabschnitt $\Delta t$ ein Verbrauchsmaximum ermittelt wird.

**7.** Verfahren nach einem der Ansprüche 1 bis 6, **dadurch gekennzeichnet, daß** aus dem Kraftstoffverbrauch pro Zeitabschnitt ein Verbrauchsminimum ermittelt wird.

**8.** Verfahren nach einem der Ansprüche 1 bis 7, **dadurch gekennzeichnet, daß** für eine bestimmte vorgegebene Fahrstrecke oder eine bestimmte vorgegebene Betriebsdauer die, die Fahrstrecke wenigstens mittelbar charakterisierenden Größen erfaßt werden und den für die Fahrstrecke beziehungsweise den Teilabschnitt ermittelten Verbrauchsdaten zugeordnet werden.

**9.** Verfahren nach einem der Ansprüche 1 bis 8, **dadurch gekennzeichnet, daß** bei Bestimmung beziehungsweise Ermittlung des Volumens aus der Einspritzmenge die Temperatur des Einspritzmediums mit berücksichtigt wird.

**10.** Verfahren nach einem der Ansprüche 1 bis 9, **dadurch gekennzeichnet, daß** die Berechnung des aktuellen Verbrauches pro Sekunde in der der Antriebsmaschine zugeordneten Steuereinrichtung erfolgt.

**11.** Verfahren nach einem der Ansprüche 1 bis 9, **dadurch gekennzeichnet, daß** die Berechnung des aktuellen Verbrauches pro Sekunde in einer zu der Antriebsmaschine zugeordneten Steuereinrichtung nebengeordneten oder übergeordneten Steuereinrichtung erfolgt und die Daten über ein Datenkommunikationsnetzwerk weitergeleitet werden.

# Fig.1

```
┌──────────────────────────┐              ┌──────────────┐  ┌──────────────────┐
│ Erfassung Einspritzmenge │              │ Ermittlung   │  │ Angaben          │
│ in Verbrennungsraum      │              │      n_m     │  │ Hersteller       │
└──────────────────────────┘              └──────────────┘  │ ZF/U             │
                                                            │ K_{M100}         │
                                                            └──────────────────┘
```

$$b(\Delta t) = \frac{M_{ri} \times K_{M100} \times n_m \times ZF/U}{60}$$

$$\text{mit } \Delta t = 15$$

Ermittlung des relativ indizierten momentan abgebbaren Momentes $M_{ri}$

Anzeige

$$b \text{ pro } \Delta t = \frac{\Delta t}{1000} \times b \text{ pro } 1s$$

Fig.2